(19)

**Europäisches Patentamt**

**European Patent Office**

**Office européen des brevets**

(11) **EP 4 641 518 A1**

(12) **EUROPEAN PATENT APPLICATION**

(43) Date of publication:
**29.10.2025 Bulletin 2025/44**

(21) Application number: **24172410.3**

(22) Date of filing: **25.04.2024**

(51) International Patent Classification (IPC):
*G06V 10/766* (2022.01)   *G06V 10/82* (2022.01)
*G06V 20/58* (2022.01)   *G06V 10/762* (2022.01)
*G06V 20/64* (2022.01)   *G06V 20/70* (2022.01)
*G01S 7/41* (2006.01)   *G06V 10/62* (2022.01)
*G01S 13/86* (2006.01)

(52) Cooperative Patent Classification (CPC):
**G06V 20/58; G01S 7/417; G06V 10/62;
G06V 10/762; G06V 10/766; G06V 10/82;
G06V 20/64; G06V 20/70;** G01S 13/867

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Aptiv Technologies AG**
**8200 Schaffhausen (CH)**

(72) Inventors:
• **Westerhoff, Jens**
**8200 Schaffhausen (CH)**

• **Spata, Dominic**
**8200 Schaffhausen (CH)**
• **Hoevel, Pascal**
**8200 Schaffhausen (CH)**
• **Zhu, Weimeng**
**8200 Schaffhausen (CH)**
• **Sych, Kseniia**
**8200 Schaffhausen (CH)**

(74) Representative: **Manitz Finsterwald**
**Patent- und Rechtsanwaltspartnerschaft mbB**
**Martin-Greif-Straße 1**
**80336 München (DE)**

(54) **A COMPUTER IMPLEMENTED METHOD FOR DETECTING OBJECTS AND DETERMINING ONE OR MORE PHYSICAL EXTENSIONS OF SAID OBJECTS**

(57)    The present disclosure relates to a computer implemented method for detecting objects (20) and determining one or more physical extensions of said objects (20) in an environment around a vehicle (10) based on data of one or more perception sensors (12) of the vehicle (10). Further, the present disclosure relates to a computer system (14), the computer system (14) being configured to carry out the said computer implemented method. Additionally, the present disclosure relates to a non-transitory computer readable medium comprising instructions for carrying out said computer implemented method.

Fig. 1

## Description

FIELD

The present disclosure relates to a computer implemented method for detecting objects and determining one or more physical extensions of said objects in an environment around a vehicle based on data of one or more perception sensors of the vehicle. Further, the present disclosure relates to a computer system, the computer system being configured to carry out the said computer implemented method. Additionally, the present disclosure relates to a non-transitory computer readable medium comprising instructions for carrying out said computer implemented method.

BACKGROUND

In the automotive field, due to the challenging requirements for autonomous driving, overall environment perception becomes increasingly important, including the perception of stationary objects in general. A classical form of sensor information aggregation with regards to the stationary environment is the Occupancy Grid Map, which is often used for 2D representation but can also be extended to a 3D grid map when height information is available from the perception sensors. However, classical grid mapping has some general shortcomings, in particular no direct object detection, separation and/or clustering, and especially high requirements on computational hardware memory.

Besides lidar and camera sensors, latest developments in radar technology enable the perception of the stationary environment in 3D up to a certain quality level.

However, with regards to the height assessment of objects, there are some challenges when working with radar. For instance, the measured elevation angles are inaccurate and in most of the cases do not directly allow correct estimation of object height. Also, strong multi-path effects might worsen the height estimate.

In summary, the mentioned main reasons, namely high computation and memory effort of 3D grid maps and an imprecise elevation information from radar are the known drawbacks of the state of the art.

Accordingly, there is a need to improve methods for detecting objects and determining one or more physical extensions of said objects in an environment around a vehicle based on data of one or more perception sensors of the vehicle.

SUMMARY

The present disclosure provides a computer implemented method, a computer system and a non-transitory computer readable medium according to the independent claims. Embodiments are given in the subclaims, the description and the drawings.

In one aspect, the present disclosure is directed at a computer implemented method for detecting objects and determining one or more physical extensions of said objects in an environment around a vehicle based on data of one or more perception sensors of the vehicle,
the method comprising:

a) Determining of raw data by the one or more perception sensors;
b) Calculating a scan comprising a cloud of 3D points based on the raw data determined in step a) and assigning a timestep to the scan;
c) Transforming the spatial information of the cloud of 3D points of the scan into a current vehicle coordinate system;
d) Dividing the cloud of 3D points of the scan by creating one or more point clusters using a clustering algorithm, wherein the one or more point clusters represent one or more detected objects in the environment;
e) Applying an adapted Natural Language Processing (NLP) transformer onto the cloud of 3D points of step c) and the respective one or more point clusters of step d), wherein the NLP transformer is adapted in such that each of the 3D points of the cloud of 3D points corresponds to a word and the one or more point clusters correspond to sentences formed by said words, whereby said words and sentences are pieces of text processed by the transformer, for providing a summary information of each of the one or more point clusters created in step d); and
f) Determining one or more physical extensions of the one or more detected objects of step d) by applying a regression algorithm to the result of the application of the adapted NLP transformer in step e).

The intention of the method of the present disclosure is to detect objects in an environment around a vehicle, and additionally to determine one or more physical extensions of said detected objects. In particular, statuary objects can be detected with the method of the disclosure. A physical extension according to the present disclosure can be a height of the respective object, but also other extensions such as a width or even a depth of the object can be determined by respectively executed methods according to the present disclosure.

A height according to the present disclosure is the physical extension of an object along an up-down direction, a width is the physical extension in lateral direction, and a depth in longitudinal direction. All of said directions are represented in a vehicle coordinate system.

The method according to the present disclosure uses raw data determined by one or more perception sensors. A perception sensor according to the present disclosure is an automotive sensor mounted in and/or at the respective vehicle, preferably with a field of view extending in front of the vehicle. The respective perception sensor is able to determine data from the environment, especially distances to surface points and/or areas of objects in the environment of the vehicle. Said measurements are labelled "raw data" in the sense of the present disclosure.

In a first step a) of the method according to the present disclosure, raw data of one or more perception sensors is determined. In other words, step a) comprises the actual measurement of the environment by the one or more perception sensors, wherein the raw data is provided as data set of the respective perception sensor. If more than one perception sensors are used, one data set is provided for each of the used one or more perception sensors. Hence, after step a) the actual measurement of the environment is completed, the measured raw data is present in the computer system used for executing the computer implemented method according to the present invention.

The next step b) of the method according to the present disclosure includes the first step of processing the data. The raw data determined in step a) is used for calculating a cloud of 3D points, labelled as "scan" in the sense of the method of the present disclosure. If more than one perception sensor is used in step a), all data sets of all used perception sensors are combined in the cloud of 3D points. In other words, independent of the number of perception sensors, after step b) a single scan comprising a single cloud of 3D points is provided. Said 3D points forming the cloud each at least comprise 3 spatial coordinates defining the spatial position of the respective 3D point.

Additionally, in step b) also a timestamp is assigned to the scan. As in most of the cases the respective vehicle, in which the method according to the present disclosure is executed, moves, assigning a timestep allows to determine the respective vehicle position, and hence in turn the position of the respective one or more perception sensors, at which the raw data was determined in step a) of the method according to the present disclosure. Thereby an absolute movement of the vehicle can be considered.

In next step c), the spatial information present in the scan, and hence the spatial coordinates of each point of the cloud of 3D points, calculated in step b) is transformed into a current vehicle coordinate system. In most of the cases, the coordinate axis of the used vehicle coordinate systems are aligned to the respective vehicle, namely a longitudinal coordinate along the front-back axis of the vehicle, a lateral coordinate perpendicular to the front-back axis and along a left-right axis of the vehicle, and a height coordinate perpendicular to both the front-back axis and the left-right axis, respectively, and along an up-down axis of the vehicle. By transforming the spatial information of the scan in the current vehicle coordinate system, the scan is set in relation to the vehicle. As the vehicle system is virtually attached to the vehicle, it moves together with the vehicle. A relative motion of the vehicle with respect to the environment, in which the objects to be detected are placed, can thereby be considered.

The next step d) of the method according to the present disclosure includes the basis for the actual detection of the objects in the environment, namely dividing the cloud of 3D points into clusters by using a clustering algorithm. Clustering algorithms group together points that are closely packed together. In other words, a clustering algorithm is capable of identifying groups of points sharing a common feature. For instance, a surface of an object measured by the perception sensor creates 3D points of which neighboring 3D points all have at least similar coordinates. However, 3D points identified at an edge of said surface have neighboring 3D points, whose spatial coordinates strongly differ, as the respective 3D points no longer are located on the respective surface. This can be used by the clustering algorithm to identify clusters in the scan, and hence to detect objects in the environment of the vehicle. In general, said clustering divides the scan, namely the cloud of 3D points, cloud into multiple smaller point clouds ("clusters") which are supposed to represent single, separated objects like pillars, trees, debris, stationary vehicles, etc.

Following the clustering, in the next step e) an adapted Natural Language Processing (NLP) transformer is applied to the cloud of 3D points of step c) and the respective one or more point clusters of step d). In the field of "Natural Language Processing" (NLP), transformers are used for such tasks as sequence-to-sequence modeling (translation) and text classification (e.g. text sentiment analysis). It implements the softmax dot-product attention operation, which is permutation invariant, and hence suitable for the processing of unstructured point cloud data.

To apply the NLP transformer to point cloud data rather than language, 3D points of the cloud of 3D points calculated in step b) take the place of words and point clusters created in step d) take the place of pieces of text. A word embedding, as needed in the classical implementation of the original NLP transformer in actual language processing, is not necessary, as the data of the 3D points and point clusters is already represented by a real-valued vector. Also, a positional encoding like it is done for sentences to provide information about the word ordering in a sentence is not necessary, as the positional information is already given by the spatial coordinates.

Further, for each of the point clusters created in step d) a summary information is provided as result of the application of the NLP transformer. Through the self-attention operations of the NLP transformer, especially its encoder part, feature information from all input points, especially concerning spatial information, can be selected, and condensed summary is calculated. As a result, the summary information is provided, for instance as a single feature vector.

In the last step f) of the method according to the present disclosure, a regression algorithm is applied to said result of the application of the NLP transformer, namely the summary information. The regression algorithm takes the summary information, for instance the single feature vector described above, and calculates a value for the respective one or more physical extension to be determined. Preferably, a differentiable regression algorithm can be used. Said application of the regression algorithm is performed for each of the point clusters created in step d), and hence for each of the detected objects.

The adapting of the NLP transformer to its new task, namely providing the summary information based on which the regression algorithm then determines the one or more physical extensions of the one or more detected objects, can also include a training of the NLP transformer, in particular in case the regression algorithm is differentiable. As training data, real and/or simulation data of the one or more perception sensors are used representing measurements, wherein the measurements correspond to a vehicle moving in the vicinity of one or more objects with known one or more physical extensions. The number of the used measurements is 1000 or more, especially 10000 or more, more especially 1000000 or more.

The training of the NLP transformer described in the previous paragraph can be for instance performed as a pre-training of the NLP transformer alone and a separate training of the regression algorithm. Said pre-training can be for instance an unsupervised pre-training. Said training of the regression algorithm can be based for example on a random forest method or on an SVM (support vector machine). By such a pre-training, providing the summary information by the NLP transformer can be trained and hence prepared for its further usage as input for the regression algorithm during execution of the method according to the present disclosure.

However, the NLP transformer and the used regression algorithm can preferably be treated as a single entity, and hence be trained together as a combined network. Preferably, again the above-mentioned 1000 or more, especially 10000 or more, more especially 1000000 or more, measurements can be used as input data for the training. However, as result of the training not the summary information, as it is the case for the above-described pre-training, but a value of the desired physical extension is received. Hence, such a combined training can be called an "end-to-end"-training. Thereby the whole actual determination of the physical extension can be trained.

In summary, the method according to the present disclosure allows to detect objects in the environment of the vehicle, and simultaneously to determine one or more physical extension of said objects. The latter is especially rendered possible by applying an adapted NLP transformer on 3D point clusters representing the detected objects.

According to an embodiment of the computer implemented method according to the present disclosure, the one or more physical extensions encompasses a height of the respective detected object. As mentioned above, elevation angles measured by the perception sensors often are inaccurate and in most of the cases do not directly allow correct estimation of object height. Also, strong multi-path effects might worsen the height estimate. This especially holds true for radar sensors as perception sensors. However, the method according to the present disclosure, especially by the application of the NLP transformer in step e), also the height of an object can be correctly determined.

According to an embodiment of the computer implemented method according to the present disclosure, the NLP transformer is further adapted in such that only an encoder part of the NLP transformer is used. Common NLP transformer comprise several distinguishable parts, in most of the cases at least an encoder and a decoder. Said encoder is used for internally preparing the pieces of text to be analyzed, wherein the decoder is fed with the data prepared by the encoder and performs the actual language processing. However, as in the method according to the present disclosure the determination of the one or more physical extension, which corresponds to the step of post-processing of the prepared data, is provided in step f) by the regression algorithm, it is sufficient to only use the encoder part of the NLP transformer. Computational effort and also hardware requirements can thereby be lowered.

According to an embodiment of the computer implemented method according to the present disclosure, step c) includes saving the scan including the respective timestep. Further, between step c) and step d) an additional step g) is carried out, in which the spatial information of the 3D points of the cloud of one or more saved scans is transformed into the current vehicle coordinate system, and the scan with the latest timestep is enriched with said transformed saved 3D points of the one or more saved scans. By saving a scan, the respective information of said scan, in particular the cloud of 3D points in the current vehicle system and the corresponding timestamp, is stored and can be used later on. In particular, all saved scans are provided with their respective time stamps. Hence, it is possible to re-calculate the vehicle movement between the point in time corresponding to the timestamp of a respective saved scan, and the current timestamp. This in turn allows transforming the spatial information of the 3D points of the saved scan into the current vehicle system. In other words, after said transformation the 3D points of the saved scan are represented in the same vehicle coordinate system as the scan with the latest timestamp, and hence 3D points corresponding to the same real object in the environment of the vehicle can be used together. In other words, the scan with the latest time stamp can be enriched with the 3D points of the one or more saved scans, thereby enlarging the number of 3D points representing each object, and hence improving the accuracy of the object detection and determination of the one or more physical extension.

According to an enhanced embodiment of the computer implemented method according to the present disclosure, a first system threshold is defined depending on the used computer system for execution of the computer implemented method, and wherein 3D points of the saved scans are deleted if a total number of 3D points of the saved scans exceeds the first system threshold. Accumulating more and more 3D points by adding more and more information of saved scans can lead to lower performance due to lack of computational hardware memory. Hence, limiting the amount of 3D points to be processed can ensure that the method according to the present disclosure can be executed respecting and/or considering the computational limits of the respective computer system. By implementing a first system threshold based on a maximum allowable number of 3D points, and deleting 3D points if said first system threshold is exceeded, an unacceptable loss of computing performance can be prohibited.

According to an enhanced embodiment of the computer implemented method according to the present disclosure a selection of the respective 3D points to be deleted is based on one or more, preferably all, of the following criteria of the respective 3D point:

- lateral distance of the 3D point to an expected driving path of the vehicle;
- longitudinal distance of the 3D point to the position of the vehicle;
- timestep of the scan in which the 3D point was calculated; and/or
- assignment of the 3D point to a point cluster.

This list is not exhaustive and can be supplemented by further criteria.

By using the lateral distance as criterium, 3D points closer to a center of an assumed driving path of the vehicle comprise a lower probability for deletion. The lateral center of the driving corridor at the longitudinal point position $x_D^n$ can be for instance be represented by $y_C^n$ (range dependent for curves), $y_D^n$ is the lateral position of the respective point:

$$P_{lat}^n = 1 - (y_D^n - y_C^n)^2 \Big/ \sum_m (y_D^m - y_C^m)^2$$

By using the longitudinal distance as criterium, 3D points closer to the vehicle comprise a lower probability for deletion. Again, the longitudinal point position can be for instance be represented by $x_D^n$, wherein the vehicle is located at the origin of the coordinate system:

$$P_{long}^n = 1 - x_D^n \Big/ \sum_m x_D^m$$

By using the timestep and hence a temporal criterium, more recent 3D points comprise a lower probability for deletion. The actual temporal representation can be for instance be represented by $age_D^n$, :

$$P_{temp}^n = 1 - age_D^n \Big/ \sum_m age_D^m$$

By using an assignment of the 3D point to a point cluster, 3D points which were clustered in previous scan comprise a lower probability for deletion. This can be represented for instance by:

$$\beta^n = \begin{cases} \beta : \text{point clustered in previous scan} \\ 1 : \text{otherwise} \end{cases}$$

where $\beta$ is an importance weighting parameter

$$P_{status}^n = 1 - \beta^n \Big/ \sum_m \beta^m$$

If all of the above-mentioned criteria are implemented, the respective probability for a 3D point to be kept results in:

$$P^n = P_{lat}^n * P_{long}^n * P_{temp}^n * P_{status}^n \bigg/ \sum_m P_{lat}^m * P_{long}^m * P_{temp}^m * P_{status}^m$$

According to an alternative or additional embodiment of the computer implemented method according to the present disclosure, a second system threshold is defined depending of the used computer system for execution of the computer implemented method, and wherein point clusters created in step d) are deleted if a total number of point clusters exceed the second system threshold. As already pointed out above, accumulating more and more 3D points by adding more and more information of saved scans can lead to lower performance due to lack of computational hardware memory. By implementing a second system threshold based on a maximum allowable number of point clusters, and deleting whole point clusters if said second system threshold is exceeded, an unacceptable loss of computing performance can be prohibited.

When implementing the method according to the present disclosure, the first system threshold can be used, or the second system threshold can be used, or both, the first and second system threshold, can be implemented as criteria for deleting 3D points or whole clusters for enhancing system performance.

According to an enhanced embodiment of the computer implemented method according to the present disclosure, a selection of the respective point cluster to be deleted is based on a distance of the point cluster to an expected driving corridor of the vehicle. In most of the cases, the main focus of the method according to the present disclosure is the detection of objects in or close to the driving corridor of the ego vehicle. Hence, basing the second system threshold on the distance of the respective point cluster to the driving corridor, wherein preferably a larger distance leads to a higher probability for deletion, allows reducing the risk that a point cluster is deleted, which represents an object close to the vehicle. A ranking of cluster importance can for instance be provided by implementing the following formula:

$$R_c = \min_n \left| C_y^n \right| * \min_n C_x^{n\,2}$$

where $C_y^n$ is the y coordinate and $C_x^n$ is the x coordinate of a point $n$ belonging to a cluster $C$.

According to an embodiment of the computer implemented method according to the present disclosure, in step d) the 3D points of the created one or more point clusters are normalized by subtracting a mean of a vertical coordinate of all 3D points of the respective point cluster from the vertical coordinate of each of the 3D points of the respective point cluster. Usually, the vertical profile of a road is not flat but might show hills and valleys. Without accurate knowledge about the vertical road profile a priori it is difficult to assess the object height based on the absolute positions of the points in the height dimension when given in vehicle coordinate system coordinates. Therefore, especially for the height determined as physical extension of the one or more objects, subtracting the cluster mean from the height information of all points within a cluster can be used to force the transformer, especially the encoder part of the transformer, to focus on the variance of points in height rather than the absolute position, which might be misleading in non-flat road profile situations.

According to an embodiment of the computer implemented method according to the present disclosure, in step d) a DBSCAN algorithm is used as clustering algorithm. As mentioned above, clustering algorithms group together points that are closely packed together. Hence, clustering algorithms are especially suitable to find and identify objects in 3D point clouds. DBSCAN is one of the most suitable clustering algorithms, which can be implemented for that task, and also one of the most common algorithms.

According to an embodiment of the computer implemented method according to the present disclosure, in step f) a multilayer perceptron is used as the regression algorithm. A multilayer perceptron is especially able to distinguish data that is not linearly separable, a feature often present in the summary information provided as result by the adapted NLP transformer in step e) of the method according to the present disclosure. A multilayer perceptron is an example of a differentiable regression algorithm. A multilayer perceptron is a known concept for implementing a regression algorithm.

According to an embodiment of the computer implemented method according to the present disclosure, in step a) as one or more perception sensor a radar sensor, a lidar sensor, a camera and/or an ultrasound sensor is used. This list is not exhaustive and can be supplemented by further sensors. In particular, also using more than one sensor of a specific kind is possible. By combining the measured data of sensors of more than one kind, the detection of objects and the determination of physical extensions of said objects can be enhanced. However, the method according to the present disclosure can be executed also based on data of a single sensor.

According to an embodiment of the computer implemented method according to the present disclosure, in step b) in addition to spatial information the 3D points are also assigned with one or more of the following information:

- color;
- reflectivity; and/or
- doppler velocity.

This list is not exhaustive and can be supplemented by further kinds of information. By adding further information to the 3D points, this information can also used later on when processing the accumulated data. For instance, a visual representation on a display unit may refer to a color and/or reflectivity of the respective shown object identified based on the clustered 3D points. A doppler velocity may help separating stationary from non-stationary, and hence moving, objects.

In another aspect, the present disclosure is directed at a computer system, said computer system being configured to carry out several or all steps of the computer implemented method described herein.

The computer system may comprise a processing unit, at least one memory unit and at least one non-transitory data storage. The non-transitory data storage and/or the memory unit may comprise a computer program for instructing the computer to perform several or all steps or aspects of the computer implemented method described herein.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid-state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

DRAWINGS

Exemplary embodiments and functions of the present disclosure are described herein in conjunction with the following drawings, showing schematically:

Fig. 1    The method according to the present disclosure, and

Fig. 2    A vehicle on a road with an object.

DETAILED DESCRIPTION

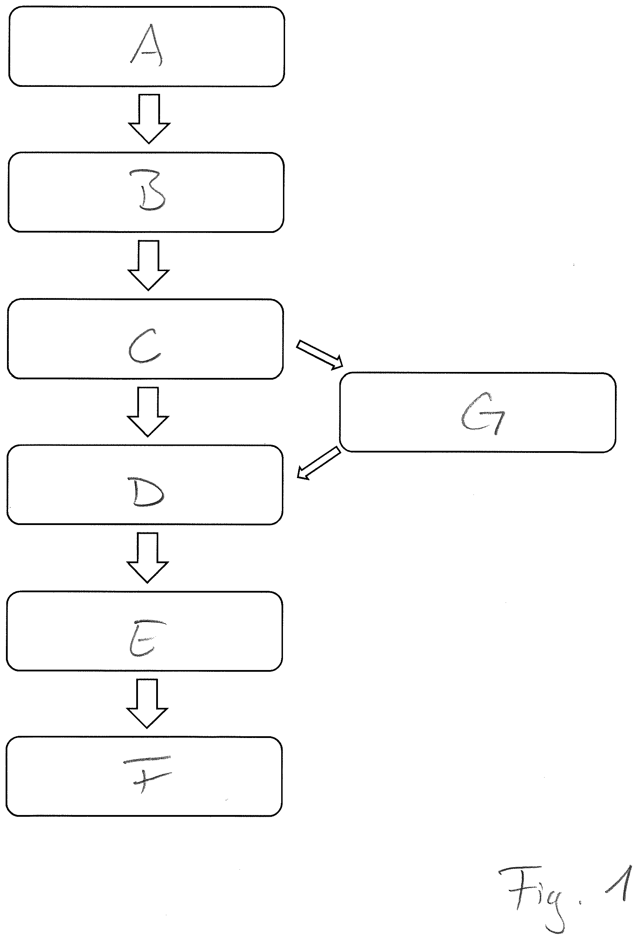

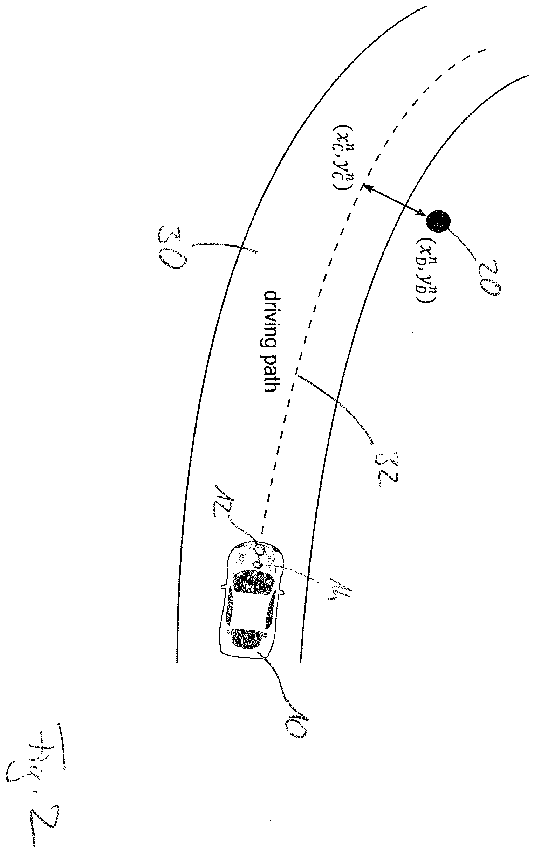

Fig. 1 depicts a schematic representation of the method according to the present disclosure, carried out by a computer system 14 provided in a vehicle 10, the vehicle 10 for instance driving along a road 30, see Fig. 2. In the following, Fig. 1, 2 are described together. Additionally, an object 20 is shown next to the road 30. For the expected driving path 32 of the vehicle 10 along the road 30, and also for the object 20, longitudinal (x) and lateral (y) coordinates are included.

During driving, as first step a) A of the method according to the present disclosure, a perception sensor 12, for instance a radar sensor 12, of the vehicle 10 determines raw data by measuring the environment of the vehicle 10. Also, other sensors 12, for instance using lidar and/or ultrasound, are possible.

In the next step b) B of the method according to the present disclosure, a computer system 14 of the vehicle 10 calculates a cloud of 3D points, namely a scan, based on the raw data of the sensor 12. Further, a timestamp is assigned to said scan. Additionally, to the spatial information, one or more of the 3D points can be assigned with further information, for instance a color and/or reflectivity information, of whether the respective 3D point comprises a Doppler velocity. The amount of additional information is limited by the used sensor 12 for measuring the raw data.

The following step c) C comprises a transformation of the spatial coordinates of each of the 3D points of the scan in a vehicle coordinate system. A respective position of each of the 3D points with relative to the vehicle 10 can thereby be provided. As the vehicle 10 is moving, also the 3D points of each of the scans taken at different times and hence for different positions of the vehicle 10, represent the change of relative position of the vehicle 10 to any object 20 in the environment of the vehicle 10.

In addition, step c) C can also comprise saving the most recent scan including its timestamp. Said saved scans can be used, after transforming to the actual vehicle coordinate system, to enrich the scan with the most recent timestamp, provided in optional step g) F of the method according to the present disclosure. This allows performing the detection of objects 20 and the respective determination of their respective physical extensions on a much broader information basis, enhancing the precision.

However, unlimited executions of additional step g) G may lead to accumulating more and more 3D points by adding more and more information of saved scans. This can lead to lower performance due to lack of computational hardware memory. Hence, the method according to the present disclosure can be provided with a first system threshold and/or a second threshold, whereby a comparison of the saved scans with either one of the two thresholds allows a determination whether a certain 3D point or a certain point cluster can be deleted.

As already hinted above, the first system threshold is used for an assessment, whether a certain 3D point can be omitted for further considerations and hence deleted. For that, different characteristics of the respective 3D point data can be considered, for instance a lateral distance of the respective 3D point ton an expected driving path 32, a longitudinal distance of the respective 3D point to the position of the vehicle 10, a temporal distance of the scan of the respective 3D point to the presence, and/or a former assignment of the 3D point to a cluster.

Alternatively, or additionally, also the second system threshold can be implemented, which is used for a comparison of whole clusters for a decision, whether the whole cluster can be deleted. For instance, said second threshold can be based on a distance of the respective cluster to the expected driving path 32 of the vehicle 10.

In the following step d) D, the cloud of 3D points, either of a single scan or of an enriched scan, is divided by creating point clusters, wherein said point clusters represent the one or more objects 20 detected by the sensor 12 in the environment of the vehicle 10. For said division of the cloud of 3D points, a clustering algorithm, for instance DBSCAN, is used.

Next, in step e) E of the method according to the present disclosure, an adapted NLP transformer is applied on the data including both the 3D points of the cloud and the identified clusters. The NLP transformer is adapted in such that the 3D points of the cloud correspond to words and the one or more point clusters correspond to pieces of text processed by the transformer. As a result, the NLP transformer provides a summary of information of each of the point cluster representing the one or more detected objects 20.

Said summary of each of the point clusters is fed in the final step f) F of the method according to the present disclosure to a regression algorithm, for instance a multilayer perceptron, which in turn provides as result the value of the investigated physical extension of the respective object 20. Preferably, said physical extension is a height of the object 20.

Reference numeral list

10      vehicle
12      sensor
14      computer system

20      object

30      road
32      driving path

A      step a) of the method according to the present disclosure
B      step b) of the method according to the present disclosure
C      step c) of the method according to the present disclosure
D      step d) of the method according to the present disclosure
E      step e) of the method according to the present disclosure
F      step f) of the method according to the present disclosure
G      step g) of the method according to the present disclosure

The present disclosure also relates to the following set of enumerated embodiments:

1. A computer implemented method for detecting objects (20) and determining one or more physical extensions of said objects (20) in an environment around a vehicle (10) based on data of one or more perception sensors (12) of the vehicle (10),
the method comprising:

a) Determining of raw data by the one or more perception sensors (12);
b) Calculating a scan comprising a cloud of 3D points based on the raw data determined in step a) (A) and assigning a timestep to the scan;
c) Transforming the spatial information of the cloud of 3D points of the scan into a current vehicle (10) coordinate system;
d) Dividing the cloud of 3D points of the scan by creating one or more point clusters using a clustering algorithm, wherein the one or more point clusters represent one or more detected objects (20) in the environment;

2. The computer implemented method according to embodiment 1,

wherein the method comprises additional steps after step d) (D), namely
e) Applying a transformer onto the cloud of 3D points of step c) (C) and the respective one or more point clusters of step d) (D), for providing a summary information of each of the one or more point clusters created in step d) (D); and
f) Determining one or more physical extensions of the one or more detected objects (20) of step d) (D) by applying a regression algorithm to the result of the application of the transformer in step e) (E).

3. The computer implemented method according to embodiment 2,
wherein transformer used in step e) (E) is an adapted Natural Language Processing (NLP) transformer, wherein the NLP transformer is adapted in such that each of the 3D points of the cloud of 3D points corresponds to a word and the one or more point clusters correspond sentences formed by said words, whereby said words and sentences are to pieces of text processed by the transformer.

4. The computer implemented method according to embodiment 3,
wherein the NLP transformer is further adapted in such that only an encoder part of the NLP transformer is used.

5. The computer implemented method according to one of the preceding embodiments 2 to 4,
wherein in step f) (F) a multilayer perceptron is used as the regression algorithm.

6. The computer implemented method according to one of the preceding embodiments,
wherein the one or more physical extensions encompasses a height of the respective detected object (20).

7. The computer implemented method according to one of the preceding embodiments,
wherein step c) (C) includes saving the scan including the respective timestep.

8. The computer implemented method according to embodiment 7,
wherein between step c) (C) and step d) (D) in an additional step g) (G) is carried out, in which the spatial information of the 3D points of the cloud of one or more saved scans is transformed into the current vehicle (10) coordinate system, and the scan with the latest timestep is enriched with said transformed saved 3D points of the one or more saved scans.

9. The computer implemented method according to embodiment 7 or 8,
wherein a first system threshold is defined depending on the used computer system (14) for execution of the computer implemented method, and wherein 3D points of the saved scans are deleted if a total number of 3D points of the saved scans exceeds the first system threshold.

10. The computer implemented method according to embodiment 9,
wherein a selection of the respective 3D points to be deleted is based on one or more, preferably all, of the following criteria of the respective 3D point:

- lateral distance of the 3D point to an expected driving path (32) of the vehicle (10);
- longitudinal distance of the 3D point to the position of the vehicle (10);
- timestep of the scan in which the 3D point was calculated; and/or
- assignment of the 3D point to a point cluster.

11. The computer implemented method according to one of the preceding embodiments,
wherein a second system threshold is defined depending of the used computer system (14) for execution of the computer implemented method, and wherein point clusters created in step d) (D) are deleted if a total number of point clusters exceed the second system threshold.

12. The computer implemented method according to embodiment 11,
wherein a selection of the respective point cluster to be deleted is based on a distance of the point cluster to an expected driving corridor of the vehicle (10).

13. The computer implemented method according to one of the preceding embodiments, wherein in step d) (D) the 3D points of the created one or more point clusters are normalized by subtracting a mean of a vertical coordinate of all 3D points of the respective point cluster from the vertical coordinate of each of the 3D points of the respective point cluster.

14. The computer implemented method according to one of the preceding embodiments, wherein in step d) (D) a DBSCAN algorithm is used as clustering algorithm.

15. The computer implemented method according to one of the preceding embodiments, wherein in step a) (A) as one or more perception sensor (12) a radar sensor (12), a lidar sensor (12), a camera and/or an ultrasound sensor (12) is used.

16. The computer implemented method according to one of the preceding embodiments, wherein in step b) (B) in addition to spatial information the 3D points are also assigned with one or more of the following information:

- color;
- reflectivity; and/or
- doppler velocity.

17. Computer system (14), the computer system (14) being configured to carry out the computer implemented method of at least one of embodiments 1 to 16.

18. Non-transitory computer readable medium comprising instructions for carrying out the computer implemented method of at least one of embodiments 1 to 16.

**Claims**

1. A computer implemented method for detecting objects (20) and determining one or more physical extensions of said objects (20) in an environment around a vehicle (10) based on data of one or more perception sensors (12) of the vehicle (10),
   the method comprising:

   a) Determining of raw data by the one or more perception sensors (12);
   b) Calculating a scan comprising a cloud of 3D points based on the raw data determined in step a) (A) and assigning a timestep to the scan;
   c) Transforming the spatial information of the cloud of 3D points of the scan into a current vehicle (10) coordinate system;
   d) Dividing the cloud of 3D points of the scan by creating one or more point clusters using a clustering algorithm, wherein the one or more point clusters represent one or more detected objects (20) in the environment;
   e) Applying an adapted Natural Language Processing (NLP) transformer onto the cloud of 3D points of step c) (C) and the respective one or more point clusters of step d) (D), wherein the NLP transformer is adapted in such that each of the 3D points of the cloud of 3D points corresponds to a word and the one or more point clusters correspond to sentences formed by said words, whereby said words and sentences are pieces of text processed by the transformer, for providing a summary information of each of the one or more point clusters created in step d) (D); and
   f) Determining one or more physical extensions of the one or more detected objects (20) of step d) (D) by applying a regression algorithm to the result of the application of the adapted NLP transformer in step e) (E).

2. The computer implemented method according to claim 1, wherein the one or more physical extensions encompasses a height of the respective detected object (20).

3. The computer implemented method according to claim 1 or 2, wherein the NLP transformer is further adapted in such that only an encoder part of the NLP transformer is used.

4. The computer implemented method according to claim 3,

wherein step c) (C) includes saving the scan including the respective timestep, and
wherein between step c) (C) and step d) (D) an additional step g) (G) is carried out, in which the spatial information of the 3D points of the cloud of one or more saved scans is transformed into the current vehicle (10) coordinate system, and the scan with the latest timestep is enriched with said transformed saved 3D points of the one or more saved scans.

5. The computer implemented method according to claim 3 or 4,

wherein a first system threshold is defined depending on the used computer system (14) for execution of the computer implemented method, and
wherein 3D points of the saved scans are deleted if a total number of 3D points of the saved scans exceeds the first system threshold.

6. The computer implemented method according to claim 5,
wherein a selection of the respective 3D points to be deleted is based on one or more, preferably all, of the following criteria of the respective 3D point:

- lateral distance of the 3D point to an expected driving path (32) of the vehicle (10);
- longitudinal distance of the 3D point to the position of the vehicle (10);
- timestep of the scan in which the 3D point was calculated; and/or
- assignment of the 3D point to a point cluster.

7. The computer implemented method according to one of the preceding claims,
wherein a second system threshold is defined depending of the used computer system (14) for execution of the computer implemented method, and wherein point clusters created in step d) (D) are deleted if a total number of point clusters exceed the second system threshold.

8. The computer implemented method according to claim 7,
wherein a selection of the respective point cluster to be deleted is based on a distance of the point cluster to an expected driving corridor of the vehicle (10).

9. The computer implemented method according to one of the preceding claims,
wherein in step d) (D) the 3D points of the created one or more point clusters are normalized by subtracting a mean of a vertical coordinate of all 3D points of the respective point cluster from the vertical coordinate of each of the 3D points of the respective point cluster.

10. The computer implemented method according to one of the preceding claims,
wherein in step d) (D) a DBSCAN algorithm is used as clustering algorithm.

11. The computer implemented method according to one of the preceding claims,
wherein in step f) (F) a multilayer perceptron is used as the regression algorithm.

12. The computer implemented method according to one of the preceding claims,
wherein in step a) (A) as one or more perception sensor (12) a radar sensor (12), a lidar sensor (12), a camera and/or an ultrasound sensor (12) is used.

13. The computer implemented method according to one of the preceding claims,
wherein in step b) (B) in addition to spatial information the 3D points are also assigned with one or more of the following information:

- color;
- reflectivity; and/or
- doppler velocity.

14. Computer system (14), the computer system (14) being configured to carry out the computer implemented method of at least one of claims 1 to 13

**15.** Non-transitory computer readable medium comprising instructions for carrying out the computer implemented method of at least one of claims 1 to 13.

Fig. 1

Europäisches
Patentamt

European
Patent Office

Office européen
des brevets

# EUROPEAN SEARCH REPORT

**Application Number**

EP 24 17 2410

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZELLER MATTHIAS ET AL: "Radar Instance Transformer: Reliable Moving Instance Segmentation in Sparse Radar Point Clouds", IEEE TRANSACTIONS ON ROBOTICS, IEEE SERVICE CENTER, PISCATAWAY, NJ, US, vol. 40, 4 December 2023 (2023-12-04), pages 2357-2372, XP011964980, ISSN: 1552-3098, DOI: 10.1109/TRO.2023.3338972 [retrieved on 2023-12-04] | 1-5,7-15 | INV. G06V10/766 G06V10/82 G06V20/58 G06V10/762 G06V20/64 G06V20/70 G01S7/41 G06V10/62 G01S13/86 |
| A | * abstract * * figures 1, 2 * * page 2360, column 1, paragraph 2 - page 2361, column 1, paragraph 2 * * page 2361, column 2, paragraph 3 - page 2363, column 1, paragraph 1 * * page 2363, column 1, paragraph 2 - page 2364, column 2, paragraph 1 * ----- | 6 | |
| X | SHENGA HUALIAN ET AL: "Improving 3D Object Detection with Channel-wise Transformer", 2021 IEEE/CVF INTERNATIONAL CONFERENCE ON COMPUTER VISION (ICCV), IEEE, 10 October 2021 (2021-10-10), pages 2723-2732, XP034092324, DOI: 10.1109/ICCV48922.2021.00274 [retrieved on 2022-02-10] * abstract * * figures 1, 2, 4 * * page 2724, column 2, paragraph 2 - page 2729, column 2, paragraph 3 * ----- | 1,2,7-15 | **TECHNICAL FIELDS SEARCHED (IPC)** G06V G01S |

-/--

The present search report has been drawn up for all claims

| Place of search | Date of completion of the search | Examiner |
|---|---|---|
| The Hague | 10 October 2024 | Konya, Iuliu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

page 1 of 2

Europäisches Patentamt

European Patent Office

Office européen des brevets

# EUROPEAN SEARCH REPORT

**Application Number**

EP 24 17 2410

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LONG FUCHEN ET AL: "PointClustering: Unsupervised Point Cloud Pre-training using Transformation Invariance in Clustering", 2023 IEEE/CVF CONFERENCE ON COMPUTER VISION AND PATTERN RECOGNITION (CVPR), IEEE, 17 June 2023 (2023-06-17), pages 21824-21834, XP034402235, DOI: 10.1109/CVPR52729.2023.02090 [retrieved on 2023-08-22] * the whole document * | 1-15 | |
| A | BIN YANG ET AL: "RadarNet: Exploiting Radar for Robust Perception of Dynamic Objects", ARXIV.ORG, CORNELL UNIVERSITY LIBRARY, 201 OLIN LIBRARY CORNELL UNIVERSITY ITHACA, NY 14853, 28 July 2020 (2020-07-28), XP081728535, * the whole document * | 1-15 | |
| A | CHANGSONG PANG ET AL: "RadarMOSEVE: A Spatial-Temporal Transformer Network for Radar-Only Moving Object Segmentation and Ego-Velocity Estimation", ARXIV.ORG, CORNELL UNIVERSITY LIBRARY, 201 OLIN LIBRARY CORNELL UNIVERSITY ITHACA, NY 14853, 22 February 2024 (2024-02-22), XP091761360, DOI: 10.1609/AAAI.V38I5.28240 * the whole document * | 1-15 | TECHNICAL FIELDS SEARCHED (IPC) |

The present search report has been drawn up for all claims

| Place of search | Date of completion of the search | Examiner |
|---|---|---|
| The Hague | 10 October 2024 | Konya, Iuliu |

EPO FORM 1503 03.82 (P04C01)